# EUROPEAN PATENT SPECIFICATION

(11) **EP 1 306 478 B1**
(45) Date of publication and mention of the grant of the patent: **03.01.2007**
(21) Application number: 02077895.7
(22) Date of filing: 17.07.2002
(51) Int. Cl.: D06B 9/06

(54) **Apparatus for continuously removing solvent from a fabric**
Vorrichtung zur kontinuierlichen Entfernung eines Lösungsmittels von einem Gewebe
Dispositif pour l'extraction continue d'un solvant d'un tissu

(30) Priority: 29.10.2001 IT MI20012268
(43) Date of publication of application: 02.05.2003
(73) Proprietor: SPEROTTO RIMAR S.r.l., 20121 Milano (IT)
(72) Inventor: Clodelli, Antonio, 36070 Trissino (Vicenza) (IT)
(74) Representative: Marchi, Massimo

(56) References cited:
- GB-A- 1 025 809
- GB-A- 1 082 182
- GB-A- 1 306 777
- GB-A- 1 406 762
- US-A- 3 730 679
- US-A- 4 729 177

## Description

The present invention relates to an apparatus for continuously removing solvent from a fabric.

Generally, the treatment of continuous fabric webs with solvents, in particular halogenated hydrocarbons, is performed in continuously operating industrial machines. These machines operate "from dry to dry", namely they subject the fabric to a washing step and to a subsequent drying step in a single operating cycle.

After being dried and before being discharged outside, the fabric is subjected to deodorizing and cooling treatments. These treatments are performed by causing a flow of air drawn from outside to pass through the fabric. The abovementioned treatments have the dual purpose of bringing the fabric to the normal ambient temperature and removing the solvent remaining trapped inside the textile structure. The air may then be subjected to a subsequent treatment before being discharged into the atmosphere. This is in order to prevent the solvent from being dispersed in the surrounding air, where it would be the cause of bad odours and pollution.

These deodorizing and cooling treatments are performed in apparatus which may be of the "open circuit" or "closed circuit" type.

In the case of the former, the air for treating the fabric is conveyed to active-carbon filters, of the known type, which absorb the solvent contained therein and release, into the atmosphere, air which is purified, although solvent may still be present therein.

In the case of the latter, the flow of air for treating the fabric is subjected to continuous recirculation. In fact, it is first made to pass into a desaturation device which removes the solvent and is then recycled through the fabric. In the case of large continuously operating apparatus, these desaturation devices are usually suitable active-carbon filters of the known type.

US-4,729,177 describes an apparatus for deodorizing a fabric, comprising a deodorizing circuit provided with active-carbon filters and a circuit for cooling the fabric. Both the circuits are connected in a closed cycle to a housing into which the fabric passes. The apparatus also comprises a circuit for regenerating (drying and cooling) the active carbon, which is also in a closed cycle and connected to the filters of the deodorizing circuit.

The fabric enters into the apparatus after it has undergone a treatment involving washing with solvent and subsequent drying. Therefore, it is dry and hot, but contains solvent. In the housing of the deodorizing apparatus, the fabric is passed through simultaneously by a flow of deodorizing air and by a flow of cooling air which are mixed together, both at a temperature which ranges from about 30°C to about 40°C. The flow of deodorizing and cooling air removes most of the solvent retained by the fabric structure. However, some of the solvent remains trapped within the fibres of the fabric due to a retention phenomenon. Therefore, the fabric which emerges from the deodorizing apparatus is dried and cooled, but has a residual solvent content.

This residual solvent content is gradually released during subsequent processing, generally into water or air, thus causing pollution of the environment.

GB-A-1082182 discloses a process for applying solvent-borne material to a travelling web. The continuous process comprises passing the web through a closed system consisting essentially of a series arrangement of a zone in which the material dissolved in the solvent is applied to the web, a primary solvent-recovery zone in which the bulk of the solvent is evaporated from the web by heat and from which at least some of the solvent vapour is withdrawn and condensed and a secondary solvent-recovery zone in which the web is air-scrubbed to remove substantially all the residual solvent, the solvent vapour being recovered from the air by adsorption.

GB-A-1025809 discloses a continuous machine for dry cleaning and drying of wool and other fibrous fabrics. Fibrous fabric is dried, after being dry- cleaned in a chamber, by being passed into a further chamber wherein it is fed in zig-zag form over rollers and taken out through an outlet. In the chamber the fabric is treated with hot air which evaporates the solvent, the saturated air being exhausted via the intake pipe of a circulating pump. The solvent is recovered in a condenser and the air passes over heaters back into the further chamber. If desired, the further chamber may be divided into two parts, the second being filled with ambient air to allow the fabric to dry at room temperature and pressure.

US-A-3 730 679 discloses further a process for removing solvent from a fabric using a rotating perforated drum, an angular section of which being subjected to a suction air stream, partially removing the solvent from the fabric.

The subject of the present invention is an apparatus for continuously removing solvent from a fabric, which avoids the drawbacks of known apparatus.

Preferably, said apparatus also comprises second suction means communicating with said heating means, said second suction means generating a second flow of said heated air which strikes said fabric inside said first housing.

Advantageously, said first suction means communicate with said filtration means, said first suction means generating a first flow of said air which is desaturated in said filtration means before entry into said first housing where it strikes said fabric.

Typically, said first flow of said air from said filtration means has a solvent content which is substantially negligible.

Preferably, said first flow of said air has a second prechosen temperature, substantially the same as the ambient temperature.

Advantageously, said apparatus also comprises first cooling means able to bring said first flow of said air to said second prechosen temperature.

Preferably, said second suction means and said heating means communicate with said first housing so as to cause recirculation of said second flow of said heated air inside said first housing and through said fabric.

In a first embodiment, said cooling means, said first suction means and said filtration means communicate with said first housing so as to cause recirculation of said first flow of air inside said first housing and through said fabric.

In another embodiment, said cooling means, said first suction means and said filtration means communicate with said first housing and with the external environment so as to suck ambient air inside said first housing and form said first air flow.

According to a first variant, said heating means and said first cooling means are arranged in parallel and communicate, upstream, with said first housing and, downstream, with said first suction means and with said second suction means, respectively.

According to a second variant, said first cooling means and said heating means are arranged in series, said first cooling means communicating, upstream, with said first housing and, downstream, with said first suction means and said filtration means, said heating means, in turn, communicating, upstream, with said filtration means and, downstream, with said first housing.

According to a further variant, said heating means communicate with ambient air and, via said second suction means, with said first housing. In turn, said first cooling means communicate, upstream, with said first housing and, downstream, via said first suction means and said filtration means, with ambient air.

Advantageously, said first housing is provided with a rectangular inlet slit for said fabric and a rectangular outlet slit for said fabric.

Preferably, said outlet slit of said first housing is able to allow said ambient air to enter inside said first housing.

Typically, said filtration means are of the active-carbon type.

Advantageously, said apparatus further comprises a second housing able to receive said fabric from said first housing, a second means for conveying said fabric, located inside said second housing, third suction means able to generate a third flow of air inside said second housing, and second cooling means able to cool said third flow of air to a third prechosen temperature, substantially the same as the ambient temperature, said third suction means and said second cooling means communicating with said second housing so as to cause recirculation of said third air flow inside said second housing and through said fabric.

Preferably, said second housing communicates with said first housing by means of a connecting pipe able to allow said fabric to pass through and is provided with a rectangular outlet slit from which said fabric emerges.

Advantageously, said outlet slit of said second housing is able to allow ambient air to enter inside said second housing.

Typically, said first temperature ranges from about 50°C to about 150°C.

Preferably, said first temperature ranges from about 80°C to about 140°C.

Even more preferably, said first temperature ranges from about 100°C to about 120°C.

Preferably, said second temperature ranges from about 30°C to about 50°C.

Preferably said third temperature ranges from about 20°C to about 40°C.

Typically, said solvent is chosen from the group of halogenated organic solvents.

Advantageously, said halogenated organic solvents are essentially chlorinated hydrocarbons.

Preferably, one of said chlorinated hydrocarbons is tetrachloroethylene.

The apparatus according to the invention allows the removal of all the solvent with which the fabric is impregnated, including that retained within the fibres. The fabric leaves the apparatus perfectly deodorized so that there is no danger of pollution of the environment.

Further characteristic features and advantages of the invention will now be illustrated with reference to embodiments shown by way of a non-limiting example, in the accompanying drawings, in which:
Fig. 1 shows schematically an apparatus for continuously removing solvent from a fabric, constructed in accordance with the invention;
Fig. 2 shows a first variant of the apparatus according to Fig. 1;
Fig. 3 shows a second variant of the apparatus according to Fig. 1;
Fig. 4 shows a third variant of the apparatus according to Fig. 2;
Fig. 5 shows a fourth variant of the apparatus according to Fig. 1;
Fig. 6 shows a fifth variant of the apparatus according to Fig. 2.

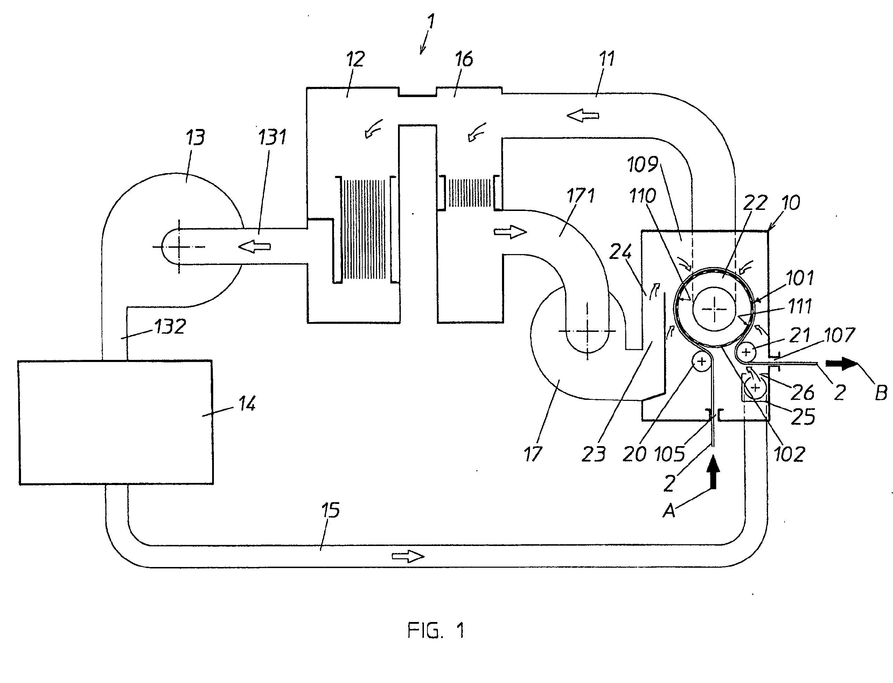

Fig. 1 shows an apparatus 1 for continuously removing solvent from a fabric 2. Generally, halogenated organic solvents, in particular chlorinated hydrocarbons, such as tetrachloroethylene, are used. The fabric 2 is supplied from a drying section of a solvent cleaning machine - known and therefore not shown - which is located upstream of the apparatus 1.

The apparatus 1 comprises a housing 10 having a chamber 109 inside which a rotating drum 101 is housed. The drum 101 has a perforated cylindrical wall 102 around which the fabric 2 is at least partially wound. Two drive rollers 20 and 21 allow winding of the fabric 2 onto the drum 101. The fabric 2, which is dry and hot, enters into the housing 10 (arrow A) via a rectangular inlet slit 105 and leaves the housing 10 (arrow B) via a rectangular outlet slit 107. The fabric 2 is conveyed inside the housing 10 by the drum 101 which causes it to advance at a prechosen speed.

From the housing 10 there extends a suction pipe 11 which is connected to a heating unit 16 and to a cooling unit 12 which are arranged in parallel. The suction pipe 11 connects an internal cylindrical cavity 22 of the drum 101 to the units 16 and 12. The heating unit 16 and cooling unit 12 are composed, for example, of heat exchangers.

The heating unit 16 is connected, by means of a suction duct 171, to a ventilator 17. The ventilator 17, in turn, is connected to the housing 10 by means of a delivery channel 23 provided with an outflow aperture 24 which emerges in the vicinity of a sector 110 of the drum 101. The pipe 11, the heating unit 16, the ventilator 17 and the channel 23 are connected in a closed circuit with the housing 10. Inside them an air flow for deodorizing the fabric 2 circulates and is heated in the heating unit 16. The temperature of the deodorizing air flow is regulated according to the physical characteristics of the specific halogenated organic solvent in use. It reaches values higher than the ambient temperature. Preferably, the temperature of the deodorizing air flow is within a range of about 50°C to about 150°C. Typically, it ranges from about 80°C to about 140°C and, for example, from about 100°C to about 120°C.

The cooling unit 12 is connected to a ventilator 13 by means of a suction duct 131. The ventilator 13, in turn, is connected, by means of a delivery duct 132, to an active-carbon filtration unit (acf) 14 of the known type. A delivery pipe 15 connects the filtration unit 14 to the housing 10. The pipe 15 terminates in a delivery channel 25 provided with an outflow aperture 26 which emerges inside the housing 10 in the vicinity of a sector 111 of the drum 101 and the outlet slit 107 for the fabric 2. The pipe 11, the cooling unit 12, the ventilator 13, the filtration unit 14 and the pipe 15 are connected in a closed circuit to the housing 10. Inside them an air flow undergoing desaturation circulates and is cooled in the cooling unit 12 and desaturated in the filtration unit 14. The temperature of the air undergoing desaturation is controlled so as to assume substantially the value of the ambient temperature. Typically, the temperature of the desaturated air flow is within the range of about 30°C to about 50°C. The filtration unit (acf) 14 absorbs the gaseous solvent contained in the air flow from the cooling unit 12 and emits an air flow which is desaturated, namely substantially solvent-free, and returns into the housing 10 via the delivery pipe 15.

The air of the external environment is not drawn back inside the housing 10 since the desaturated air leaving the outflow aperture 26 of the channel 25 forms a barrier with respect to the external environment.

When the apparatus 1 is in operation, the fabric 2 which enters into the housing 10 via the slit 105 is dry and hot and incorporates a certain quantity of air which is substantially saturated with solvent, conveying said air along with it. Inside the housing 10, the hot air supplied by the ventilator 17 and the desaturated air from the filtration unit 14 are mixed together. Therefore, inside the housing 10, in an operating condition, a flow of hot air having a temperature higher than the ambient temperature and practically free of solvent, namely with a substantially negligible solvent saturation, is established. The air flow is directed radially from the chamber 109 of the housing 10 towards the internal cavity 22 and passes through the fabric 2 and the perforated wall 102 of the drum 101. This hot and dry air flow strikes and permeates the fabric 2, removing completely the solvent trapped inside the structure of the fabric 2 and within its fibres.

The fabric 2, perfectly deodorized, namely completely free of solvent, emerges from the housing 10 through the slit 107 so as to undergo natural gradual cooling to the temperature of the external environment.

As a result of the treatment with hot and dry air, the apparatus 1 allows the removal of solvent from the fabric 2 in an extremely rapid and efficient manner. Preferably, the operating conditions are such that removal of solvent from the fabric which is introduced into the apparatus 1 is at least from 70% to 90%.

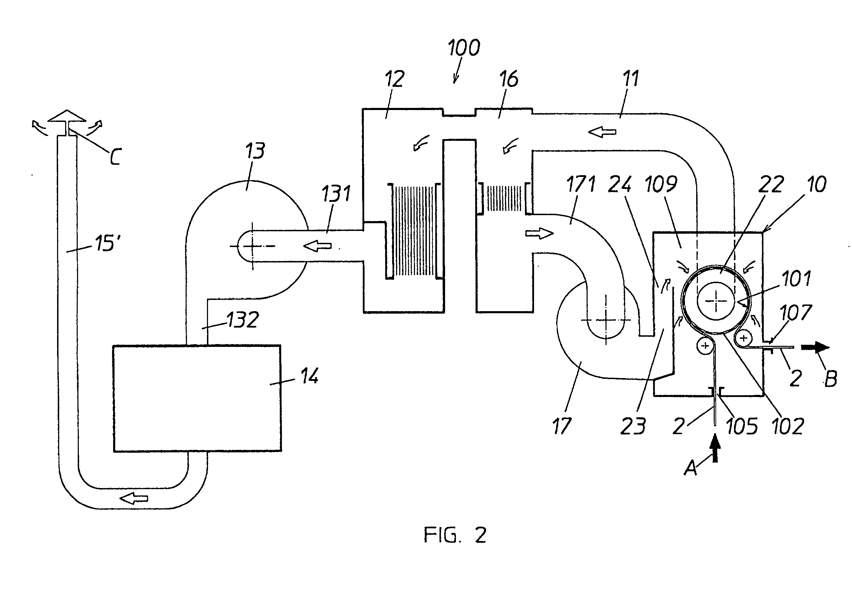

Fig. 2 shows an apparatus 100 for continuously removing solvent from a fabric, which is a variant of the apparatus according to Fig. 1 and in which identical parts are indicated by the same numbers.

In the apparatus 100, the circuit for the air to be desaturated, comprising the cooling unit 12, the ventilator 13 and the filtration unit 14, is of the open-loop type. Ambient air enters into the housing 10 through the slit 107 and the filtration unit 14 communicates with the ambient air via a delivery pipe 15'.

The filtration unit (acf) 14 absorbs the gaseous solvent contained in the air flow from the cooling unit 12 and, via the delivery pipe 15', releases the desaturated air flow (arrow C) into the atmosphere.

The circuit for the heating air of the apparatus 100, comprising the heating unit 16 and the ventilator 17, is again of the closed-loop type and operates in the same manner as that of the apparatus 1 according to Fig. 1.

Inside the housing 10, the hot air supplied by the ventilator 17 and the ambient air are mixed together, forming an air flow with a substantially high temperature and substantially negligible solvent saturation which strikes and permeates the fabric 2. This hot and dry air flow removes completely the solvent trapped inside the structure of the fabric 2 and within its fibres.

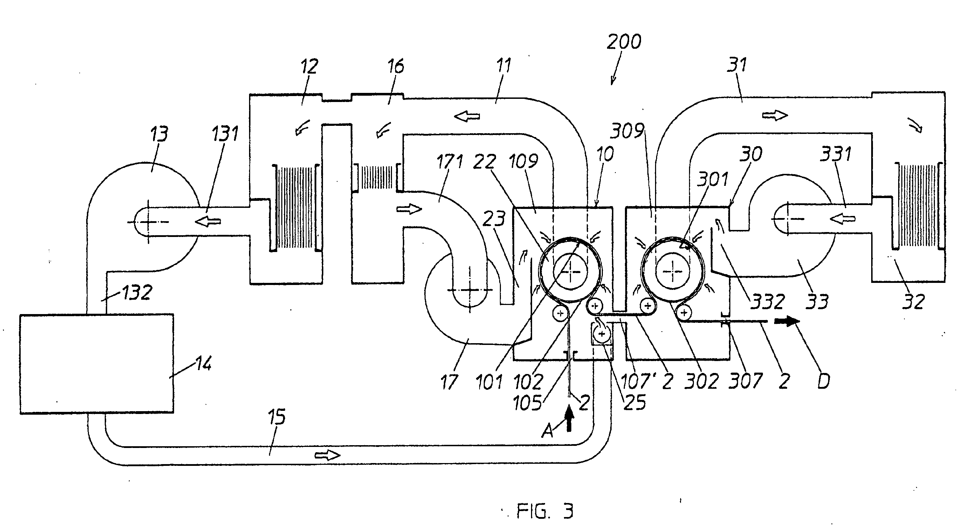

Fig. 3 shows an apparatus 200 for continuously removing solvent from a fabric, which is another variant of the apparatus 1 according to Fig. 1 and in which identical parts are indicated by the same numbers.

In the apparatus 200, a housing 30 is arranged immediately downstream of the housing 10. The housing 10 and the housing 30 are connected together via a connecting pipe 107' inside which the fabric 2 leaving the housing 10 passes.

The fabric 2 is perfectly deodorized inside the housing 10, as in the apparatus 1 and 100, and therefore emerges completely solvent-free.

The housing 30 houses, internally, a rotating drum 301 provided with a perforated wall 302 around which the fabric 2 is at least partially wound. The fabric 2 emerges from the housing 30 (arrow D) through a rectangular slit 307. From the housing 30 there extends a suction pipe 31 which is connected to a further cooling unit 32 and to a further ventilator 33. The ventilator 33 communicates with the cooling unit 32 by means of a suction duct 331 and with the housing 30 by means of a delivery channel 332.

The suction pipe 31, the cooling unit 32 and the ventilator 33 are connected in a closed circuit to the housing 30. A flow of low-temperature cooling air, cooled inside the cooling unit 32, circulates inside them. The temperature of the cooling air ranges from about 20°C to about 40°C.

This flow of cooling air passes radially through the fabric 2 and the perforated wall 302 of the drum 301, removing the heat still retained in the fabric 2 upon leaving the housing 10 and performing cooling of the fabric down to a temperature closed to ambient temperature. Cooling of the fabric 2 is very rapid and efficient because the flow of cooling air is sucked from the housing 30, after passing through the fabric 2, and is cooled in the cooling unit 32 so as to then return into the housing 30 and pass through the fabric 2 again. In this way, the temperature of the fabric lowers significantly and rapidly.

The fabric 2, perfectly deodorized and cooled, emerges from the housing 30 through the slit 307, ready to be conveyed away for subsequent processing.

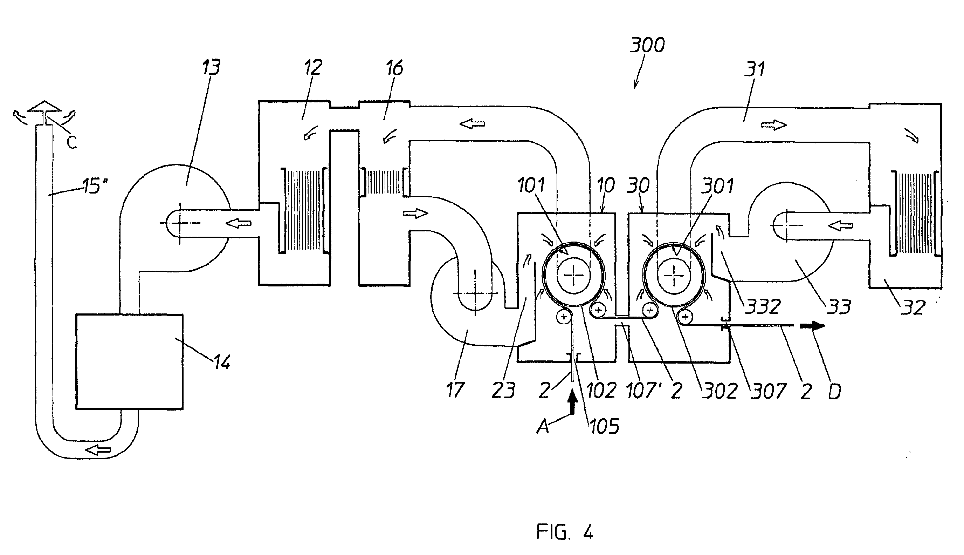

Fig. 4 shows an apparatus 300 for continuously removing solvent from a fabric, which is a variant of the apparatus 100 in Fig. 2 and in which identical parts are indicated by the same numbers.

In the apparatus 300, the circuit for the air to be desaturated, comprising the cooling unit 12, the ventilator 13 and the filtration unit 14, is of the open-loop type and the ambient air enters into the housing 30 through the slit 307. The air introduced from the external environment through the slit 307 flows out from the housing 30 to the housing 10 through the slit 107' and from here to the filtration unit (acf) 14. The filtration unit 14 is connected with the ambient air via a delivery pipe 15" which releases into the atmosphere the desaturated air flow (arrow C) supplied from the filtration unit 14.

Therefore, inside the apparatus 300, the cooling-air circuit, comprising the cooling unit 32 and the ventilator 33, is of the open-loop type, while the heating air circuit, comprising the heating unit 16 and the ventilator 17, is of the closed-loop type, like that of the apparatus 1, 100 and 200, and operates in the same manner.

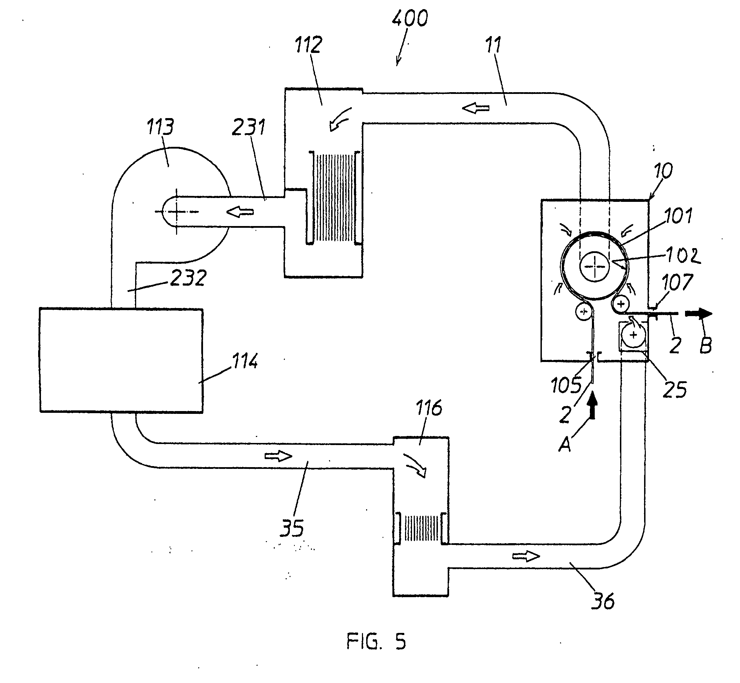

Fig. 5 shows an apparatus 400 for continuously removing solvent from a fabric, which is a variant of the apparatus 1 according to Fig. 1 and in which the identical parts are indicated by the same numbers.

In the apparatus 400, the suction pipe 11, departing from the housing 10, is connected to a cooling unit 112, and the latter is connected to a ventilator 113, via a duct 231. The ventilator 113, in turn, is connected to a filtration unit 114 via a duct 232. A heating unit 116 is connected to the filtration unit 114 via a delivery pipe 35 and to the housing 10 via a delivery pipe 36 and the delivery channel 25.

In the apparatus 400, all the air flow leaving the housing 10 via the pipe 11 is drawn in by the ventilator 113. This sole air flow is cooled inside the cooling unit 112, desaturated in the filtration unit 114 and then heated in the heating unit 116 before returning into the housing 10.

In the apparatus 400, the operating temperatures of the cooling unit 112 and heating unit 116 are the same as those of the units 12 and 16 of the apparatus 1 according to Fig. 1.

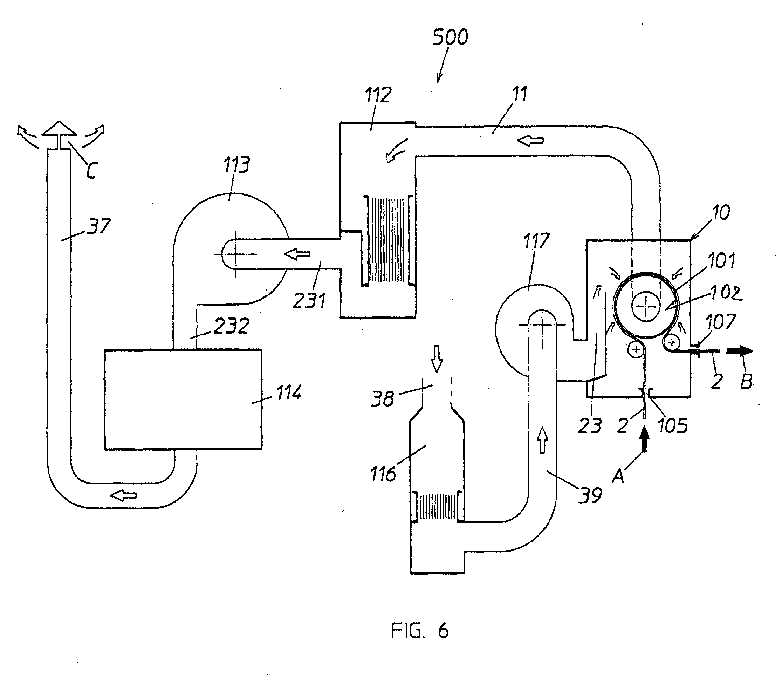

Fig. 6 shows an apparatus 500 for continuously removing solvent from a fabric, which is a variant of the apparatus 100 according to Fig. 2 and in which identical parts are indicated by the same numbers.

In the apparatus 500, the suction pipe 11, departing from the housing 10, communicates with the cooling unit 112 and the latter communicates with the ventilator 113 and with the filtration unit 114. The filtration unit 114, in turn, communicates with the ambient air via a delivery pipe 37. Ambient air enters into the heating unit 116 through an inlet mouth 38. The heating unit 116 communicates with the housing 10 via a delivery pipe 39, the ventilator 117 and the delivery channel 23.

In the apparatus 500, the air flow leaving the housing 10 via the pipe 11 is drawn in by the ventilator 113. The air flow is cooled inside the cooling unit 112, desaturated in the filtration unit 114 and then released into the atmosphere via the pipe 37. A flow of ambient air enters into the heating unit 116 through the inlet mouth 38, is heated and then conveyed into the housing 10 via the pipe 39 and the channel 23.

In the apparatus 500, the operating temperatures of the cooling unit 112 and heating unit 116 are the same as those of the units 12 and 16 of the apparatus 1 according to Fig. 1.

## Claims

1. Apparatus (1; 100; 200; 300; 400; 500) for continuously removing solvent from a fabric (2) comprising at least one first housing (10), a first means (101) for conveying said fabric (2), located inside the first housing (10), at least first air suction means (13; 113) and air filtration means (14; 114), whereby said first conveying means (101) comprises a rotating drum having a perforated wall (102) around which said fabric (2) is wound **characterized in that** said rotating drum (101) has said an internal cylindrical cavity (22), said apparatus also comprising heating means (16; 116) generating heated air, said heated air being at a first pre-chosen temperature which is higher than ambient temperature, said heated air being delivered into said first housing (10), said internal cylindrical cavity (22) being connected to a suction pipe (11) so that said heated air passes through and permeates said fabric (2) wound around said perforated wall (102) so as to remove said solvent from the fabric (2).

2. Apparatus (1; 100; 200; 300; 400; 500) according to Claim 1, **characterized in that** it also comprises second suction means (17; 117) communicating with said heating means (16; 116), said second suction means (17; 117) generating a second flow of said heated air which strikes said fabric (2) inside said first housing (2).

3. Apparatus (1; 100; 200; 300; 400; 500) according to Claims 1 and 2, **characterized in that** said first suction means (13; 113) communicate with said filtration means (14; 114), said first suction means (13; 113) generating a first flow of said air which is desaturated in said filtration means (14; 114) before entry into said first housing (10) where it strikes said fabric (2).

4. Apparatus (1; 100; 200; 300; 400; 500) according to Claim 3, **characterized in that** said first flow of said air leaving said filtration means (14; 114) has a solvent content which is substantially negligible.

5. Apparatus (1; 100; 200; 300; 400; 500) according to Claim 3, **characterized in that** said first flow of said air has a second prechosen temperature, substantially the same as the ambient temperature.

6. Apparatus (1; 100; 200; 300; 400; 500) according to Claims 3 and 5, **characterized in that** it also comprises first cooling means (12; 112) able to bring said first flow of said air to said second prechosen temperature.

7. Apparatus (1; 100; 200; 300; 400; 500) according to Claim 2, **characterized in that** said second suction means (17) and said heating means (16) communicate with said first housing (10) so as to cause recirculation of said second flow of said heated air inside said first housing (10) and through said fabric (2).

8. Apparatus (1; 100; 200; 300; 400; 500) according to Claims 3 and 6, **characterized in that** said cooling means (12), said first suction means (13) and said filtration means (14) communicate with said first housing (10) so as to cause recirculation of said first flow of said air inside said first housing (10) and through said fabric (2).

9. Apparatus (1; 100; 200; 300; 400; 500) according to Claims 3 and 6, **characterized in that** said cooling means (12), said first suction means (13) and said filtration means (14) communicate with said first housing (10) and with the external environment so as to suck ambient air inside said first housing (10) and form said first air flow.

10. Apparatus (1; 100; 200; 300; 400; 500) according to Claims 1, 2 and 6, **characterized in that** said heating means (16) and said first cooling means (12) are arranged in parallel and communicate, upstream, with said first housing (10) and, downstream, with said first suction means (13) and with said second suction means (17), respectively.

11. Apparatus (1; 100; 200; 300; 400; 500) according to Claims 1, 2 and 6, **characterized in that** said first cooling means (112) and said heating means (116) are arranged in series, said first cooling means (112) communicating, upstream, with said first housing (10) and, downstream, with said first suction means (113) and said filtration means (114), said heating means (116), in turn, communicating, upstream, with said filtration means (114) and, downstream, with said first housing (10).

12. Apparatus (1; 100; 200; 300; 400; 500) according to Claims 1, 2 and 6, **characterized in that** said heating means (116) communicate with ambient air and, via said second suction means (117), with said first housing (10), and said first cooling means (112) communicate, upstream, with said first housing (10) and, downstream, via said first suction means (113) and said filtration means (114), with ambient air.

13. Apparatus (1; 100; 200; 300; 400; 500) according to Claim 1, **characterized in that** said first housing (10) is provided with a rectangular inlet slit (105) for said fabric (2) and a rectangular outlet slit (107) for said fabric (2).

14. Apparatus (1; 100; 200; 300; 400; 500) according to Claims 9 and 13, **characterized in that** said outlet slit (107) of said first housing (10) is able to allow said ambient air to enter inside said first housing (10).

15. Apparatus (1; 100; 200; 300; 400; 500) according to Claim 1, **characterized in that** said filtration means (14; 114) are of the active-carbon type.

16. Apparatus (1; 100; 200; 300; 400; 500) according to Claims 1, 2 and 6, **characterized in that** it further comprises a second housing (30) able to receive said fabric (2) from said first housing (10), a second means (301) for conveying said fabric (2), located inside said second housing (30), third suction means (33) able to generate a third flow of air inside said second housing (30), and second cooling means (32) able to cool said third flow of air to a third prechosen temperature, substantially the same as the ambient temperature, said third suction means (33) and said second cooling means (32) communicating with said second housing (30) so as to cause recirculation of said third air flow inside said second housing (30) and through said fabric (2).

17. Apparatus (1; 100; 200; 300; 400; 500) according to Claim 16, **characterized in that** said second housing (30) communicates with said first housing (10) by means of a connecting pipe (107') able to allow said fabric (2) to pass through and is provided with a rectangular outlet slit (307) from which said fabric (2) emerges.

18. Apparatus (1; 100; 200; 300; 400; 500) according to Claim 17, **characterized in that** said outlet slit (307) of said second housing (30) is able to allow ambient air to enter inside said second housing (30).

19. Apparatus (1; 100; 200; 300; 400; 500) according to Claim 1, **characterized in that** said first temperature ranges from about 50°C to about 150°C.

20. Apparatus (1; 100; 200; 300; 400; 500) according to Claim 19, **characterized in that** said first temperature ranges from about 80°C to about 140°C.

21. Apparatus (1; 100; 200; 300; 400; 500) according to Claim 20, **characterized in that** said first temperature ranges from about 100°C to about 120°C.

22. Apparatus (1; 100; 200; 300; 400; 500) according to Claim 5, **characterized in that** said second temperature ranges from about 30°C to about 50°C.

23. Apparatus (1; 100; 200; 300; 400; 500) according to Claim 16, **characterized in that** said third temperature ranges from about 20°C to about 40°C.

24. Apparatus (1; 100; 200; 300; 400; 500) according to Claim 1, **characterized in that** said solvent is chosen from the group of halogenated organic solvents.

25. Apparatus (1; 100; 200; 300; 400; 500) according to Claim 24, **characterized in that** said halogenated organic solvents are essentially chlorinated hydrocarbons.

26. Apparatus (1; 100; 200; 300; 400; 500) according to Claim 25, **characterized in that** one of said chlorinated hydrocarbons is tetrachloroethylene.

## Patentansprüche

1. Vorrichtung (1;100;200;300;400;500) zum kontinuierlichen Entfernen eines Lösungsmittels aus Stoff (2), welche zumindest ein erstes Gehäuse (10), eine erste Transporteinrichtung (101) zur Bewegung des Stoffs (2), welche in dem ersten Gehäuse (10) angeordnet ist, zumindest eine erste Einrichtung zur Luftansaugung (13;113) und eine Luftfilter-Einrichtung (14; 114) aufweist, wobei die erste Transporteinrichtung (101) eine drehbare Rolle mit einer perforierten Wandung (102) hat, um welche der Stoff (2) herumgewickelt ist, **dadurch gekennzeichnet, daß** die drehbare Rolle (101) einen inneren, zylindrischen Hohlraum (22) hat, daß außerdem eine erwärmte Luft erzeugende Heizeinrichtung (16; 116) vorgesehen ist, deren erwärmte Luft eine vorgewählte Temperatur hat, die höher als die Umgebungstemperatur ist, wobei die erwärmte Luft in das erste Gehäuse (10) eingebracht wird und wobei der innere, zylindrische Hohlraum (22) an eine Saugleitung (11) angeschlossen ist, so daß die erwärmte Luft in den um die perforierte Wandung (102) herumgewickelten Stoff (2) eindringt und durch denselben hindurchtritt, um das Lösungsmittel aus dem Stoff (2) zu entfernen.

2. Vorrichtung (1;100;200;300;400;500) nach Anspruch 1, **dadurch gekennzeichnet, daß** außerdem eine zweite Einrichtung zur Luftansaugung (17;117) vorhanden ist, die mit der Heizeinrichtung (16;116) in Verbindung steht und einen zweiten Luftstrom von erwärmter Luft erzeugt, der innerhalb des ersten Gehäuses (2) auf den Stoff (2) auftrifft.

3. Vorrichtung (1;100;200;300;400;500) nach Anspruch 1 oder 2, **dadurch gekennzeichnet, daß** die erste Einrichtung zum Luftansaugung (13;113) mit der Luftfilter-Einrichtung (14;114) in Verbindung steht, wobei die erste Einrichtung zur Luftansaugung (13;113) einen ersten Luftstrom erzeugt, der in der Luftfilter-Einrichtung (14;114) entfeuchtet wird, bevor er in das erste Gehäuse (10) gelangt, in dem er auf dem Stoff (2) auftrifft.

4. Vorrichtung (1;100;200;300;400;500) nach Anspruch 3, **dadurch gekennzeichnet, daß** der erste Luftstrom beim Verlassen der Luftfilter-Einrichtung (14;114) einen im wesentlichen zu vernachlässigenden Gehalt an Lösungsmittel hat.

5. Vorrichtung (1;100;200;300;400;500) nach Anspruch 3, **dadurch gekennzeichnet, daß** der zweite Luftstrom eine zweite vorgewählte Temperatur hat, die im wesentlichen der Umgebungstemperatur entspricht.

6. Vorrichtung (1;100;200;300;400;500) nach Anspruch 3 und 5, **dadurch gekennzeichnet, daß** außerdem eine erste Kühleinrichtung (12; 112) vorhanden ist, welche in der Lage ist, den ersten Luftstrom auf die zweite vorgewählte Temperatur zu bringen.

7. Vorrichtung (1;100;200;300;400;500) nach Anspruch 2, **dadurch gekennzeichnet, daß** die zweite Einrichtung zur Luftansaugung (17) und die Heizeinrichtung (16) mit dem ersten Gehäuse (10) in Verbindung stehen, so daß eine Zirkulation des zweiten Luftstroms in dem ersten Gehäuse (10) und durch den Stoff (2) entsteht.

8. Vorrichtung (1;100;200;300;400;500) nach Anspruch 3 und 6, **dadurch gekennzeichnet, daß** die Kühleinrichtung (12), die erste Einrichtung zur Luftansaugung (13) und die Luftfilter-Einrichtung (14) mit dem ersten Gehäuse (10) in Verbindung stehen, so daß eine Zirkulation des ersten Luftstroms innerhalb des ersten Gehäuses (10) und durch den Stoff (2) entsteht.

9. Vorrichtung (1;100;200;300;400;500) nach Anspruch 3 und 6, **dadurch gekennzeichnet, daß** die Kühleinrichtung (12), die erste Einrichtung zur Luftansaugung (13) und die Luftfilter-Einrichtung (14) mit dem ersten Gehäuse (10) und der Umgebung in Verbindung stehen, so daß zur Erzeugung des ersten Luftstroms Luft aus der Umgebung angesaugt wird.

10. Vorrichtung (1;100;200;300;400;500) nach Anspruch 1,2 und 6, **dadurch gekennzeichnet, daß** die Heizeinrichtung (16) und die erste Kühleinrichtung (12) parallel zueinander angeordnet sind und in Strömungsrichtung gesehen mit dem ersten Gehäuse (10) sowie in Gegenstromrichtung gesehen jeweils mit der ersten Einrichtung zur Luftansaugung (13) und mit der zweiten Einrichtung zur Luftansaugung (17) in Verbindung stehen.

11. Vorrichtung (1;100;200;300;400;500) nach Anspruch 1,2 und 6, **dadurch gekennzeichnet, daß** die erste Kühleinrichtung (112) und die Heizeinrichtung (116) hintereinander angeordnet sind, daß die erste Kühleinrichtung (112) in Strömungsrichtung mit dem ersten Gehäuse (10) und in Gegenstromrichtung mit der ersten Einrichtung zur Luftansaugung (13) in Verbindung steht und daß die Heizeinrichtung (116) ihrerseits in Strömungsrichtung mit der Luftfilter-Einrichtung (114) und in Gegenstromrichtung mit dem ersten Gehäuse (10) in Verbindung steht.

12. Vorrichtung (1;100;200;300;400;500) nach Anspruch 1, 2 und 6, **dadurch gekennzeichnet, daß** die Heizeinrichtung (116) mit der Umgebungsluft und über die zweite Einrichtung zur Luftansaugung (117) mit dem ersten Gehäuse (10) in Verbindung steht und daß die erste Kühleinrichtung (112) in Strömungsrichtung mit dem ersten Gehäuse (10) und in Gegenstromrichtung über die erste Einrichtung zur Luftansaugung (113) und die Luftfilter-Einrichtung (114) mit der Umgebungsluft in Verbindung steht.

13. Vorrichtung (1;100;200;300;400;500) nach Anspruch 1, **dadurch gekennzeichnet, daß** das erste Gehäuse (10) einen rechteckigen Einlaßschlitz (105) und einen rechteckigen Austrittsschlitz (107) für den Stoff (2) aufweist.

14. Vorrichtung (1;100;200;300;400;500) nach Anspruch 9 und 13, **dadurch gekennzeichnet, daß** der Austrittsschlitz (107) des ersten Gehäuses (10) so bemessen ist, daß Umgebungsluft in das erste Gehäuse (10) gelangen kann.

15. Vorrichtung (1;100;200;300;400;500) nach Anspruch 1, **dadurch gekennzeichnet, daß** die Luftfilter-Einrichtungen (14;1 14) als Aktivkohle-Einrichtungen ausgeführt sind.

16. Vorrichtung (1;100;200;300;400;500) nach Anspruch 1, 2 und 6, **dadurch gekennzeichnet, daß** außerdem ein zweites Gehäuse (30), in welches der Stoff (2) vom ersten Gehäuse (10) aus gelangt, eine zweite Transporteinrichtung (301) zur Bewegung des Stoffs (2), welche innerhalb des zweiten Gehäuses (30) angeordnet ist, eine dritte Einrichtung zur Luftansaugung (33), welche innerhalb des zweiten Gehäuses (30) einen dritten Luftstrom erzeugt, und eine zweite Kühleinrichtung (32) vorhanden sind, welche den dritten Luftstrom auf eine dritte vorgewählte Temperatur abkühlt, die im wesentlichen der Umgebungstemperatur entspricht, und daß die dritte Einrichtung zur Luftansaugung (33) und die zweite Kühleinrichtung (32) mit dem zweiten Gehäuse (30) in Verbindung stehen, so daß eine Zirkulation des dritten Luftstroms innerhalb des zweiten Gehäuses (30) und durch den Stoff (2) entsteht.

17. Vorrichtung (1;100;200;300;400;500) nach Anspruch 16, **dadurch gekennzeichnet, daß** das zweite Gehäuse (30) mit dem ersten Gehäuse (10) über ein Verbindungsrohr (107') in Verbindung steht, durch welches der Stoff (2) hindurchgelangen kann und welches mit einem rechteckigen Austrittsschlitz (307) versehen ist, aus welchem der Stoff (2) austritt.

18. Vorrichtung (1;100;200;300;400;500) nach Anspruch 17, **dadurch gekennzeichnet, daß** der Austrittsschlitz (307) des zweiten Gehäuses (30) so bemessen ist, daß Umgebungsluft in das zweite Gehäuse (30) gelangen kann.

19. Vorrichtung (1;100;200;300;400;500) nach Anspruch 1, **dadurch gekennzeichnet, daß** die erste Temperatur zwischen etwa 50 °C und etwa 150 °C liegt.

20. Vorrichtung (1;100;200;300;400;500) nach Anspruch 19, **dadurch gekennzeichnet, daß** die erste Temperatur zwischen etwa 80 °C und etwa 140 °C liegt.

21. Vorrichtung (1;100;200;300;400;500) nach Anspruch 20, **dadurch gekennzeichnet, daß** die erste Temperatur zwischen etwa 100 °C und etwa 120 °C liegt.

22. Vorrichtung (1;100;200;300;400;500) nach Anspruch 5, **dadurch gekennzeichnet, daß** die zweite Temperatur zwischen etwa 30 °C und 50 °C liegt.

23. Vorrichtung (1;100;200;300;400;500) nach Anspruch 16, **dadurch gekennzeichnet, daß** die dritte Temperatur zwischen etwa 20 °C und etwa 40 °C liegt.

24. Vorrichtung (1;100;200;300;400;500) nach Anspruch 1, **dadurch gekennzeichnet, daß** das Lösungsmittel aus der Gruppe der halogenierten organischen Lösungsmittel gewählt ist.

25. Vorrichtung (1;100;200;300;400;500) nach Anspruch 24, **dadurch gekennzeichnet, daß** die halogenierten organischen Lösungsmittel im wesentlichen chlorierte Kohlenwasserstoffe sind.

26. Vorrichtung (1;100;200;300;400;500) nach Anspruch 25, **dadurch gekennzeichnet, daß** einer der chlorierten Kohlenwasserstoffe Tetrachlorethylen ist.

## Revendications

1. Appareil (1 ; 100 ; 200 ; 300 ; 400 ; 500) pour l'extraction continue d'un solvant d'un tissu (2) comprenant au moins un premier boîtier (10), des premiers moyens (101) pour transporter ledit tissu (2), situés à l'intérieur du premier boîtier (10), au moins des premiers moyens d'aspiration d'air (13 ; 113) et des moyens de filtration d'air (14 ; 114), moyennant quoi lesdits premiers moyens de transport (101) comprennent un tambour rotatif ayant une paroi perforée (102) autour duquel ledit tissu (2) est enroulé, **caractérisé en ce que** ledit tambour rotatif (101) a une cavité cylindrique interne (22), ledit appareil comprenant également des moyens de chauffage (16 ; 116) générant de l'air chaud, ledit air chaud étant à une première température prédéfinie qui est supérieure à la température ambiante, ledit air chaud étant délivré dans ledit premier boîtier (10), ladite cavité cylindrique interne (22) étant reliée à un tuyau d'aspiration (11) de sorte que ledit air chaud passe à travers et imprègne ledit tissu (2) enroulé autour de ladite paroi perforée (102) afin de retirer ledit solvant du tissu (2).

2. Appareil (1 ; 100 ; 200 ; 300 ; 400 ; 500) selon la revendication 1, **caractérisé en ce qu'**il comprend également des seconds moyens d'aspiration (17 ; 117) en communication avec lesdits moyens de chauffage (16 ; 116), lesdits seconds moyens d'aspiration (17 ; 117) générant un second flux dudit air chaud qui frappe ledit tissu (2) à l'intérieur dudit premier boîtier (2).

3. Appareil (1 ; 100 ; 200 ; 300 ; 400 ; 500) selon les revendications 1 et 2, **caractérisé en ce que** lesdits premiers moyens d'aspiration (13 ; 113) communiquent avec lesdits moyens de filtration (14 ; 114), lesdits premiers moyens d'aspiration (13 ; 113) générant un second flux dudit air qui est désaturé dans lesdits moyens de filtration (14 ; 114) avant d'entrer dans ledit premier boîtier (10) où il frappe ledit tissu (2).

4. Appareil (1 ; 100 ; 200 ; 300 ; 400 ; 500) selon la revendication 3, **caractérisé en ce que** ledit premier flux dudit air quittant lesdits moyens de filtration (14 ; 114) a une teneur en solvant qui est sensiblement négligeable.

5. Appareil (1 ; 100 ; 200 ; 300 ; 400 ; 500) selon la revendication 3, **caractérisé en ce que** ledit premier flux dudit air a une seconde température prédéfinie, sensiblement la même que la température ambiante.

6. Appareil (1 ; 100 ; 200 ; 300 ; 400 ; 500) selon les revendications 3 et 5, **caractérisé en ce qu'**il comprend également des premiers moyens de refroidissement (12 ; 112) pouvant amener ledit premier flux dudit air à ladite seconde température prédéfinie.

7. Appareil (1 ; 100 ; 200 ; 300 ; 400 ; 500) selon la revendication 2, **caractérisé en ce que** lesdits seconds moyens d'aspiration (17) et lesdits moyens de chauffage (16) communiquent avec ledit premier boîtier (10) afin d'entraîner la recirculation dudit second flux dudit air chaud à l'intérieur dudit premier boîtier (10) et à travers ledit tissu (2).

8. Appareil (1 ; 100 ; 200 ; 300 ; 400 ; 500) selon les revendications 3 et 6, **caractérisé en ce que** lesdits moyens de refroidissement (12), lesdits premiers moyens d'aspiration (13) et lesdits moyens de filtration (14) communiquent avec ledit premier boîtier (10) afin d'entraîner la recirculation dudit premier flux dudit air à l'intérieur dudit premier boîtier (10) et à travers ledit tissu (2).

9. Appareil (1 ; 100 ; 200 ; 300 ; 400 ; 500) selon les revendications 3 et 6, **caractérisé en ce que** lesdits moyens de refroidissement (12), lesdits premiers moyens d'aspiration (13) et lesdits moyens de filtration (14) communiquent avec ledit premier boîtier (10) et avec l'environnement externe de sorte à coincer l'air ambiant à l'intérieur dudit premier boîtier (10) et à former ledit second flux d'air.

10. Appareil (1 ; 100 ; 200 ; 300 ; 400 ; 500) selon les revendications 1, 2 et 6, **caractérisé en ce que** lesdits moyens de chauffage (16) et lesdits premiers moyens de refroidissement (12) sont agencés en parallèle et communiquent, en amont, avec ledit premier boîtier (10) et, en aval, avec lesdits premiers moyens d'aspiration (13) et avec lesdits seconds moyens d'aspiration (17), respectivement.

11. Appareil (1 ; 100 ; 200 ; 300 ; 400 ; 500) selon les revendications 1, 2 et 6, **caractérisé en ce que** lesdits premiers moyens de refroidissement (112) et lesdits moyens de chauffage (116) sont agencés en série, lesdits premiers moyens de refroidissement (112) communiquant, en amont, avec ledit premier boîtier (10) et, en aval, avec lesdits premiers moyens d'aspiration (113) et lesdits moyens de filtration (114), lesdits moyens de chauffage (116), à leur tour, communiquant, en amont, avec lesdits moyens de filtration (114) et, en aval, avec ledit premier boîtier (10).

12. Appareil (1 ; 100 ; 200 ; 300 ; 400 ; 500) selon les revendications 1, 2 et 6, **caractérisé en ce que** lesdits moyens de chauffage (116) communiquent avec l'air ambiant et, via lesdits seconds moyens d'aspiration (117), avec ledit premier boîtier (10), et lesdits premiers moyens de refroidissement (112) communiquent, en amont, avec ledit premier boîtier (10) et, en aval, via lesdits premiers moyens d'aspiration (113) et lesdits moyens de filtration (114), avec l'air ambiant.

13. Appareil (1 ; 100 ; 200 ; 300 ; 400 ; 500) selon la revendication 1, **caractérisé en ce que** ledit premier boîtier (10) est pourvu d'une fente d'entrée rectangulaire (105) pour ledit tissu (2) et d'une fente de sortie rectangulaire (107) pour ledit tissu (2).

14. Appareil (1 ; 100 ; 200 ; 300 ; 400 ; 500) selon les revendications 9 et 13, **caractérisé en ce que** ladite fente de sortie (107) dudit premier boîtier (10) peut permettre audit air ambiant d'entrer dans ledit premier boîtier (10).

15. Appareil (1 ; 100 ; 200 ; 300 ; 400 ; 500) selon la revendication 1, **caractérisé en ce que** lesdits moyens de filtration (14 ; 114) sont du type à charbon actif.

16. Appareil (1 ; 100 ; 200 ; 300 ; 400 ; 500) selon les revendications 1, 2 et 6, **caractérisé en ce qu'**il comprend en outre un second boîtier (30) capable de recevoir ledit tissu (2) dudit premier boîtier (10), des seconds moyens (301) pour transporter ledit tissu (2), situés à l'intérieur dudit second boîtier (30), des troisièmes moyens d'aspiration (33) capables de générer un troisième flux d'air à l'intérieur dudit second boîtier (30), et des seconds moyens de refroidissement (32) capables de refroidir ledit troisième flux d'air à une troisième température prédéfinie, sensiblement la même que la température ambiante, lesdits troisièmes moyens d'aspiration (33) et lesdits second moyens de refroidissement (32) communiquant avec ledit second boîtier (30) afin d'entraîner une recirculation dudit troisième flux d'air à l'intérieur dudit second boîtier (30) et à travers ledit tissu (2).

17. Appareil (1 ; 100 ; 200 ; 300 ; 400 ; 500) selon la revendication 16, **caractérisé en ce que** ledit second boîtier (30) communique avec ledit premier boîtier (10) au moyen d'un tuyau de raccord (107') capable de permettre audit tissu (2) de passer à travers et est pourvu d'une fente de sortie rectangulaire (307) de laquelle ledit tissu (2) émerge.

18. Appareil (1 ; 100 ; 200 ; 300 ; 400 ; 500) selon la revendication 17, **caractérisé en ce que** ladite fente de sortie (307) dudit second boîtier (30) peut permettre à l'air ambiant d'entrer à l'intérieur dudit second boîtier (30).

19. Appareil (1 ; 100 ; 200 ; 300 ; 400 ; 500) selon la revendication 1, **caractérisé en ce que** ladite première plage de température est comprise entre environ 50°C et environ 150°C.

20. Appareil (1 ; 100 ; 200 ; 300 ; 400 ; 500) selon la revendication 19, **caractérisé en ce que** ladite première plage de température est comprise entre environ 80°C et environ 140°C.

21. Appareil (1 ; 100 ; 200 ; 300 ; 400 ; 500) selon la revendication 20, **caractérisé en ce que** ladite première plage de température est comprise entre environ 100°C et environ 120°C.

22. Appareil (1 ; 100 ; 200 ; 300 ; 400 ; 500) selon la revendication 5, **caractérisé en ce que** ladite seconde plage de température est comprise entre environ 30°C et environ 50°C.

23. Appareil (1 ; 100 ; 200 ; 300 ; 400 ; 500) selon la revendication 16, **caractérisé en ce que** ladite troisième plage de température est comprise entre environ 20°C et environ 40°C.

24. Appareil (1 ; 100 ; 200 ; 300 ; 400 ; 500) selon la revendication 1, **caractérisé en ce que** ledit solvant est choisi parmi le groupe constitué de solvants organiques halogénés.

25. Appareil (1 ; 100 ; 200 ; 300 ; 400 ; 500) selon la revendication 24, **caractérisé en ce que** lesdits solvants organiques halogénés sont essentiellement des hydrocarbures chlorés.

26. Appareil (1 ; 100 ; 200 ; 300 ; 400 ; 500) selon la revendication 25, **caractérisé en ce que** l'un desdits hydrocarbures chlorés est du tétrachloroéthylène.
